# EUROPÄISCHE PATENTSCHRIFT

(11) **EP 2 602 144 B1**
(45) Veröffentlichungstag und Bekanntmachung des Hinweises auf die Patenterteilung: **04.03.2015**
(21) Anmeldenummer: 12008071.8
(22) Anmeldetag: 03.12.2012
(51) Int. Cl.: B60K 11/08

(54) **Fahrzeugfrontend**
Vehicle front end
Extrémité frontale d'un véhicule

(30) Priorität: 06.12.2011 DE 102011120324
(43) Veröffentlichungstag der Anmeldung: 12.06.2013
(73) Patentinhaber: HBPO GmbH, 59552 Lippstadt (DE)
(72) Erfinder: Schöning, Ralf, 33442 Herzebrock-Clarholz (DE)
(74) Vertreter: Schober, Mirko

(56) Entgegenhaltungen:
- DE-A1-102009 020 352
- DE-B- 1 096 014
- JP-A- 2008 106 982
- US-A1- 2010 071 977

## Beschreibung

Die Erfindung betrifft ein Fahrzeugfrontend nach dem Oberbegriff des Anspruchs 1.

Entsprechende Frontends, wie sie z.B. aus DE 36 05 064 A1 bekannt sind, weisen einen Kühler auf, der bei der Fahrt durch die auf das Fahrzeugfrontend treffende Luftströmung durchströmt wird. Um dieses Durchströmen zu regulieren, werden in Fahrtrichtung vor den Kühler verschwenkbare Lamellen gesetzt, die in einem Rahmen gelagert sind und sich je nach gewünschtem Lufteinlass um Schwenkachsen quer zur Fahrtrichtung verschwenken lassen.

Aus der gattungsbildenden US 2010/071977 A1 geht ein Fahrzeugfrontend hervor, welches einen Fahrzeugkühler und zwei vor dem Fahrzeugkühler angeordnete Lamelleneinheiten umfasst. Die Lamelleneinheiten weisen einen mittig vor dem Fahrzeugkühler angeordneten stationären Träger als Teil eines diese umlaufenden Rahmens auf. In dem so gebildeten Rahmen sind schwenkbare Lamellen eingesetzt, welche der Regulierung des Einlasses von Kühlluft dienen. Dabei erstrecken sich die Lamellen jeweils mit zwei ihrer gegenüberliegenden Seiten zwischen ersten Drehzapfen, welche in entsprechende Öffnungen des Rahmens eingreifen. Hierdurch sind die Lamellen um eine etwa quer zur Fahrtrichtung verlaufende Schwenkachse schwenkbar gelagert. An dem Rahmen sind zwischen den sich gegenüberliegenden Drehzapfen, zwischen denen sich die Lamellen erstrecken, Stützelemente vorgesehen. Besagte Stützelemente sind dazu ausgelegt, dass sich die Lamellen in einer entgegen der Fahrtrichtung wirkenden Drucklast abstützen können. Dabei weisen die Stützelemente Stützvorsprünge auf, welche so ausgebildet sind, dass sie jeweils gegen einen Anlagebereich auf der Innenseite einer Lamelle anliegen oder bei entgegen der Fahrtrichtung auf die Lamelle ausgeübter Drucklast anliegen können. Hierzu weisen die Stützvorsprünge Anlageabschnitte auf, welche zur Anlage an die Anlagebereiche der Lamelle dienen.

Die DE 10 2009 020 352 A1 offenbart eine in einer Bugverkleidung eines Kraftfahrzeugs angeordnete Aufnahmevorrichtung für ein Kühlluftklappenmodul. Das Kühlluftklappenmodul umfasst einen Aufnahmerahmen, welcher in seinem Außenrand angeordnete Lagerungen in Form von Bohrungen besitzt. Zwischen den Lagerungen erstrecken sich einzelne Kühlluftklappen, welche über endseitige Lagerungszapfen in die Lagerungen des Aufnahmerahmens eingreifen. Hierdurch sind die jeweiligen Kühlluftklappen um eine etwa quer zur Fahrtrichtung verlaufende Schwenkachse schwenkbar gelagert, um den Luftdurchsatz zu hinter der Bugverkleidung liegenden Kühlern zu regulieren. Zwischen den Lagerungen des Aufnahmerahmens ist eine vertikale Stütze mit vorragenden Nasen angeordnet, welchen ebenfalls Lagerungen in Form von Bohrungen besitzen. Die vertikale Stütze ist dazu ausgelegt, die Kühlluftklappen gegen eine auf diese entgegen der Fahrtrichtung wirkende Drucklast abzustützen. Hierzu weisen die einzelnen Kühlluftklappen mittig angeordnete Aussparungen auf, durch welche die Nasen der vertikalen Stütze zumindest abschnittsweise hindurch greifen. Die Abstützung erfolgt über eine zusätzliche Lagerung der Kühlluftklappen an der vertikalen Stütze, wobei an diesen im Bereich ihrer jeweiligen Aussparung ausgebildete Lagerungszapfen vorgesehen sind, welche in die Lagerungen der vertikalen Stütze greifen.

Mit der DE 10 96 014 B wurde eine Ventilationsjalousie bekannt, welche einen Klappenrahmen mit darin angeordneten Klappen aus Blech aufweist. Die Klappen besitzen endseitige Lagerwinkel mit jeweils einer Bohrung, in welche in dem Klappenrahmen angeordnete Bolzen greifen. Durch die so gebildete Schwenkachse sind die einzelnen Klappen entsprechend verschwenkbar gelagert. Zwischen den die Bolzen aufweisenden Seiten des Klappenrahmens ist eine Rückenstütze in Form eines Blechstreifens vorgesehen. Die Rückenstütze umfasst einzelne Ausschnitte, in welche hinein die Klappen verschwenkt werden können. Dabei weisen die Ausschnitte eine Kante sowie eine konzentrisch zur Schwenkachse liegende Kreisbogenkante auf. Zwischen je zwei Ausschnitten ist ein nach vorn vorspringender zungenartiger Blechstreifenteil ausgebildet, welcher eine Stützstelle umfasst. Im geschlossenen Zustand der Klappen ist die jeweils obenliegende Klappe durch die Stützstelle unterstützt und die darunterliegende Klappe durch Anlage abgestützt. Durch die Stützstelle ist sowohl ein Durchhängen der Klappe in der senkrechten Ebene als auch eine Durchbiegung in Richtung quer zur senkrechten Ebene wirksam verhindert. Hierbei bildet die Kante in voll geöffneter Stellung der Klappe eine Anlage für diese, so dass Windkräfte sie nicht nach oben durchzubiegen vermögen. Demgegenüber verhindert die Kreisbogenkante des Ausschnitts im ganzen Klappenschwenkbereich ein Durchhängen infolge des Klappengewichtes.

Der JP 2008 106982 A ist eine Verschlussstruktur zu entnehmen, welche der Regulierung eines Luftstroms hin zu Wärmetauschern dient. Hierzu ist eine Vielzahl an Lamellen vorgesehen, welche über eine an jeweils einer ihrer Längskanten angeordnete Drehwelle verschwenkbar gelagert sind. Dabei erstrecken sich die Lamellen in eine Breite eines Fahrzeugs. Aufgrund der Anordnung der Drehwelle und des Eigengewichts der Lamellen sind diese im Normalzustand vertikal nach unten gerichtet, wodurch die Verschlussstruktur geschlossen ist. Weiterhin ist eine Druckplatte vorgesehen, welche eine an die Anzahl der Lamellen angepasste Menge an vorstehenden Bereichen besitzt. Die Lamellen werden gegen ihr Eigengewicht durch ein geeignetes Antriebsmittel verschwenkt. Hierzu ist das Antriebsmittel mit einem zylindrischen Stellelement gekoppelt, welches einen radial vorstehenden Stellnocken besitzt. Der Stellnocken wirkt mit der Druckplatte zusammen. Je nach Ausrichtung des Stellnockens bei einer Drehung des Stellelements um seine Längsachse wird die Druckplatte entsprechend weit aus ihrer Lage heraus in Richtung der Lamellen verdrängt. Dabei treten die vorstehenden Bereichen der Druckplatte von hinten mit den Lamellen in Kontakt, woraufhin diese aus ihrer hängenden vertikalen Stellung heraus aufgestellt werden.

Sind die Lamellen vollständig geschlossen, strömt die Luft über die Kühlerhaube hinweg. Je weiter die Lamellen geschlossen sind, desto höher ist aufgrund der größeren Angriffsfläche die auf die Lamellen wirkende Last bei der Fahrt, was zum Durchbiegen der Lamellen, die in der Regel aus Kunststoff bestehen, führt. Damit können die Lamellen bei starkem Druck beschädigt oder am Verschwenken gehindert werden. Hierzu ist aus DE 3605064 A1 bekannt, zwischen den eigentlichen Schwenklagern der Lamellen an den Außenseiten der Lagerrahmen zusätzliche Lager einzusetzen. Dazu müssen die Lamellen zweigeteilt werden und zwischen den zweigeteilten Lamellen Schwenkbolzen vorgesehen werden. Diese werden in eine Stützstrebe eingesetzt, die dazu Aussparungen zur Aufnahme der Schwenkbolzen aufweist. Um zu verhindern, dass die Lamellen aus der entsprechenden Fassung des zusätzlichen Lagers gelöst werden, müssen die Aussparungen der Stützstrebe nach Einsetzen der Lamellen mit einem Verschlusselement verschlossen werden.

Diese Ausgestaltung ist nicht nur mit hohem Montageaufwand verbunden, sondern erfordert auch zahlreiche Bauteile und eine spezielle zweiteilige Ausformung der Lamellen. Die für den Eintrag der Kühlluft nutzbare Fläche bzw. die durch die Lamellen abschottbare Fläche wird dadurch zudem verkleinert, was nachteilig ist, wenn es um Einsparung von Bauraum geht.

Der Erfindung liegt daher die Aufgabe zugrunde, ein Fahrzeugfrontend der eingangs genannten Art anzugeben, bei dem die genannten Nachteile nicht auftreten, und welches eine Reduzierung des Aufwandes sowohl während der Montage als auch bei der Fertigung seiner Bauteile ermöglicht.

Gelöst wird diese Aufgabe durch ein Fahrzeugfrontend mit den Merkmalen des Anspruchs 1. Vorteilhafte Ausführungsformen finden sich in den Unteransprüchen.

Erfindungsgemäß weisen die Stützelemente Stützvorsprünge auf. Diese sind in ihrer Form so ausgebildet, dass sie jeweils gegen einen Anlagebereich auf der Innenseite einer Lamelle anliegen oder bei entgegen der Fahrtrichtung auf die Lamelle ausgeübter Drucklast anliegen können. Dazu weisen die Stützvorsprünge Anlageabschnitte zur Anlage an die Anlagebereiche der Lamelle auf. Hierdurch werden die Stützelemente, genauer die Stützvorsprünge, zum Schwenklager, wenn die Lamelle daran anliegt und verschwenkt wird. Dabei ist vorgesehen, dass die Stützvorsprünge quer zur Fahrtrichtung zur Stützstrebe wenigstens abschnittweise versetzt angeordnet sind. Dadurch kann die einstückige Ausführung von Rahmen und Stützelementen im Spritzgussverfahren ohne Hinter-schnitt im Spritzgusswerkzeug hergestellt werden.

Dazu können die Anlagebereiche vorteilhaft als Vertiefungen in der Lamelle ausgebildet sein: In diese Vertiefungen, die z.B. als sich in Längsrichtung der Lamellen erstreckende Rille mit wenigstens teilweise rundem Querschnitt ausgebildet sein können, können die Anlageabschnitte eingreifen, so dass eine Art Gelenk zwischen Lamelle und Anlageabschnitt entsteht. Bevorzugt sind die Anlageabschnitte als parallel zur Längsrichtung der Lamellen verlaufende Zapfen ausgebildet und bilden so Schwenklager für die Lamellen.

Insbesondere kann vorgesehen sein, dass das Stützelement im Bereich jedes Stützvorsprungs einen, insbesondere oberhalb und/oder unterhalb desselben vorgesehenen, Aufnahmeraum zur Aufnahme eines Teils der Lamellen beim Verschwenken derselben in die geöffnete Stellung aufweist. So kann die Lamelle am Stützvorsprung frei verschwenkt werden.

Ein besonderer Vorteil der Erfindung liegt darin, dass der Rahmen mit den Stützvorsprüngen sehr einfach hergestellt werden kann. Insbesondere können die Stützelemente mit den Stützvorsprüngen am Rahmen angespritzt oder mit diesem einstückig ausgebildet sein. Dann sind lediglich die Lamellen separate Bauteile und die Erfindung kommt mit einer minimalen Bauteilanzahl aus, was Kosten und den Montageaufwand deutlich reduziert.

Zur zusätzlichen Verstärkung können die Stützelemente Versteifungsrippen aufweisen, die insbesondere einteilig mit den Stützelementen ausgebildet oder an diese angespritzt sind. Dabei können Versteifungsrippen in alle Richtungen verlaufend angeordnet werden, z.B. können sie sich in Fahrtrichtung und quer zur Fahrtrichtung und/oder in einer Richtung senkrecht den genannten Richtungen erstrecken. So kann die Lastaufnahme der Konstruktion und die Widerstandfähigkeit der Stützelemente noch verbessert werden.

Erfindungsgemäß ist vorgesehen, dass die Stützelemente eine quer zur Fahrtrichtung und quer zur Längserstreckung der Lamellen verlaufende, zwei gegenüberliegende Ränder des Rahmens verbindende Stützstreben aufweisen, an denen die Stützvorsprünge vorgesehen sind. Durch die so verlaufenden Stützstreben wird der Verbund aus Rahmen und Stützelementen besonders wirksam versteift.

Die Erfindung wird nachfolgend anhand der Figuren 1 bis 4 näher erläutert.

Figur 1 zeigt einen Teil eines ein Fahrzeugfrontend bildenden Rahmens zur Aufnahme von Lamellen.

Figur 2 zeigt den in Figur 1 gezeigten Rahmen mit Lamellen.

Figur 3A zeigt einen perspektivischen Ausschnitt des Rahmens Bereich eines Stützelements mit Lamellen. Figur 3B zeigt einen vergrößerten Ausschnitt des Rahmens im Bereich eines Stützelements von vorne (entgegen der Fahrtrichtung).

Figur 4 zeigt eine Schnittansicht durch den Rahmen mit Lamellen in einer geöffneten und einer geschlossenen Stellung.

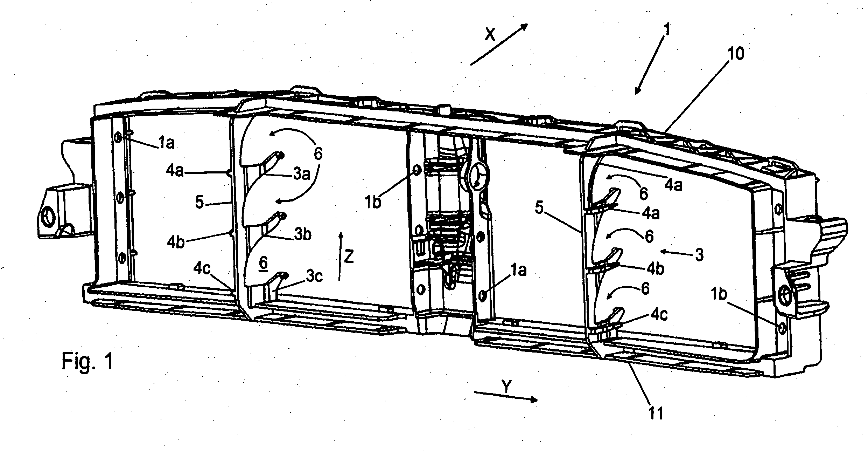

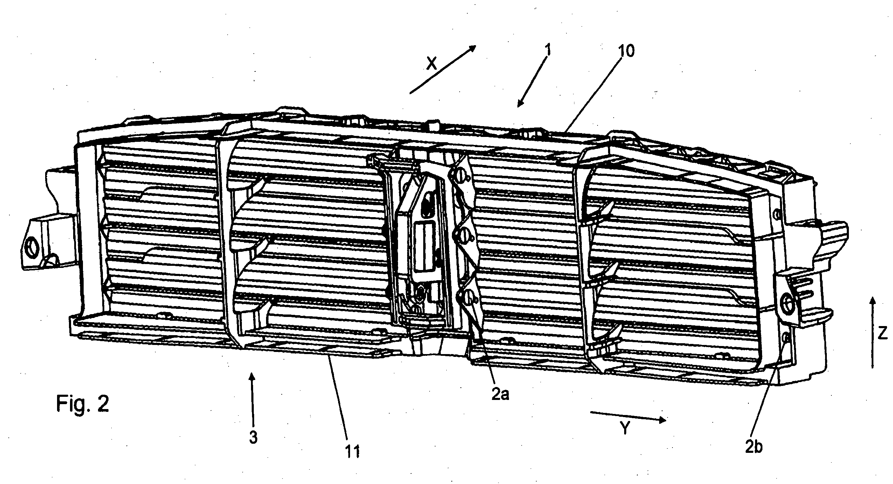

Der in den Figuren 1 und 2 gezeigte Rahmen 1 dient der Aufnahme von Lamellen 2 und erstreckt sich mit seiner Längsausdehnung in Fahrzeugquerrichtung Y. X bezeichnet die Fahrtrichtung des Fahrzeugs, Z die Höhenrichtung des Rahmens 1 senkrecht zum Boden. Die Lamellen 2 weisen an ihren kurzen gegenüberliegenden Stirnseiten 2a, 2b Schwenkzapfen auf, die in entsprechenden Schwenklagern 1a, 1b des Rahmens 1 gelagert sind. Im einfachsten Fall sind die Schwenklager 1a, 1b Bohrungen in den im Wesentlichen in Z-Richtung verlaufenden Seitenteilen oder Mittelteilen des Rahmens. Zwischen zwei gegenüberliegenden, eine Lamelle 2 aufnehmenden Schwenklagern 1a, 1b ist, bevorzugt etwa in der Mitte, wenigstens ein Stützelement 3 vorgesehen, welches im gezeigten Beispiel sich in Richtung Z erstreckt und dabei die Oberseite 10 und die Unterseite 11 des Rahmens 1 miteinander verbindet. Die Stützelemente weisen in Fahrtrichtung X vorspringende Stützvorsprunge 3a, 3b, 3c auf, zwischen und benachbart zu denen in Z-Richtung Aufnahmeräume 6 vorgesehen sind. Die Stützelemente 3 können einstückig im Spritzgussverfahren mit dem Rahmen 1 verbunden sein.

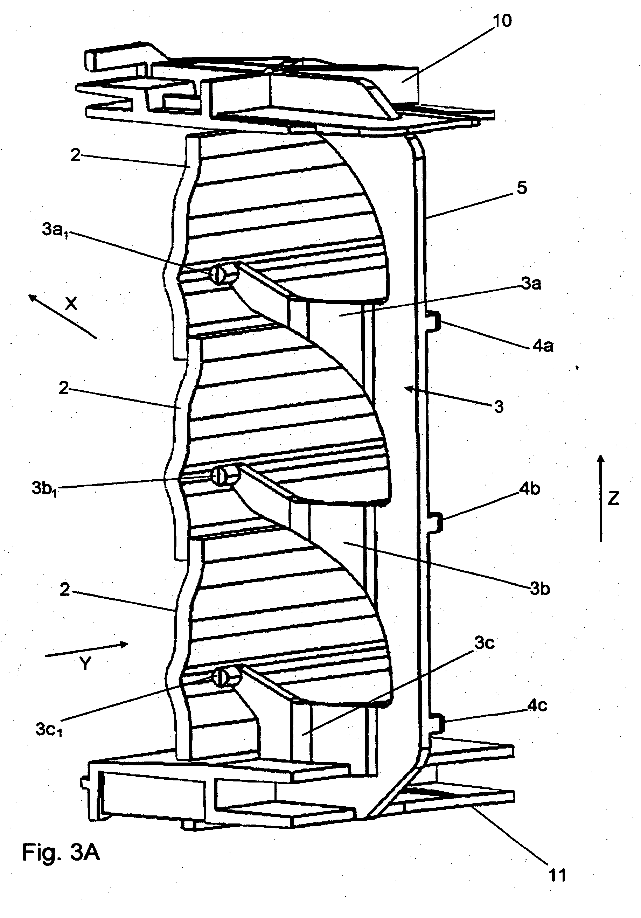

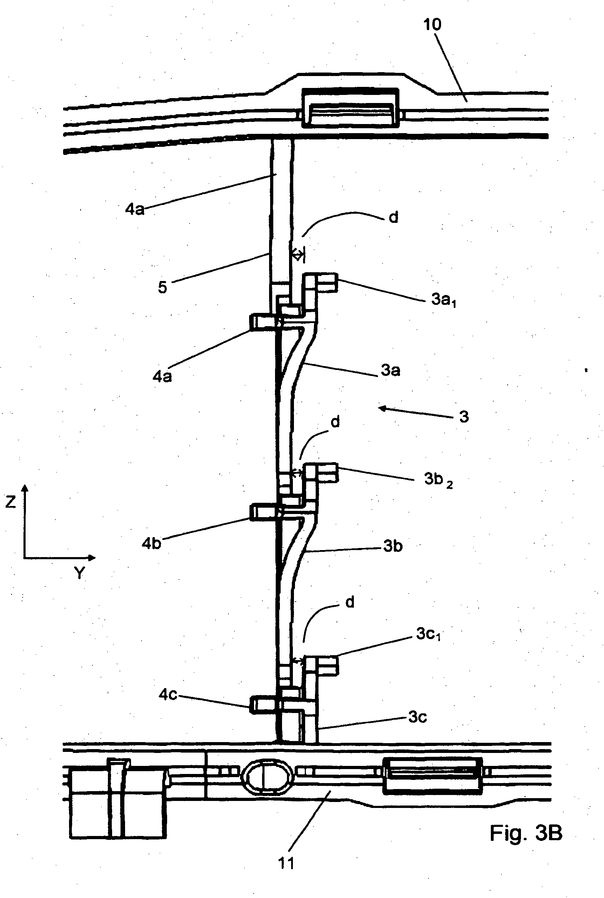

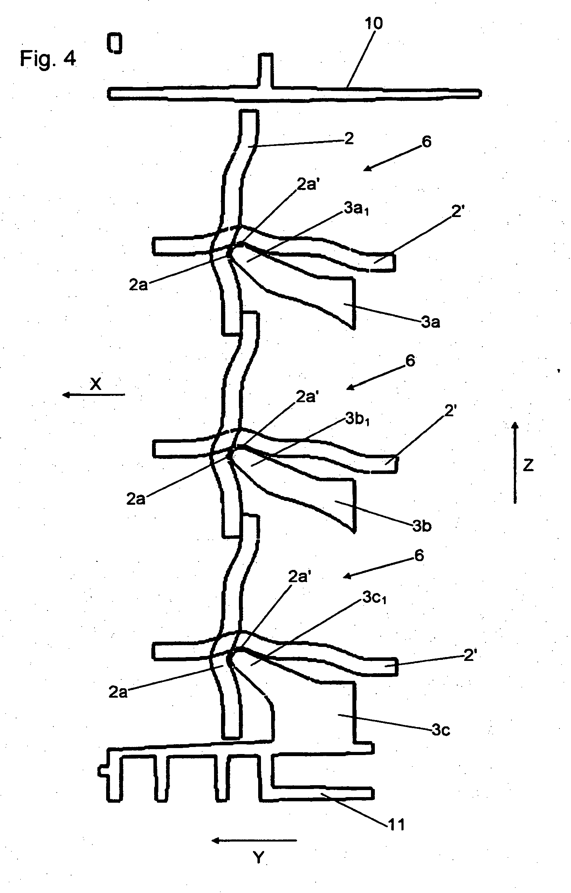

Die Form und Funktion der Stützelemente 3, die im Wesentlichen mit ihren Stützvorsprüngen 3a, 3b, 3c so ausgebildet sind, dass sie gegen ein Durchbiegen der Lamellen bei einer Windlast gegen die Fahrtrichtung X abgestützt werden, werden anhand der Figuren 3A, 3B und 4 näher erläutert.

Figur 3A zeigt einen perspektivischen Ausschnitt des erfindungsgemäßen Frontends im Bereich des Rahmens 1 und eines Stützelements 3. Das Stützelement 3 weist eine im Wesentlichen in Z-Richtung verlaufende Stützstrebe 5 auf, von der die Stützvorsprünge 3a, 3b, 3c sich im Wesentlichen in Fahrtrichtung, hier leicht in Richtung der Oberseite 10 des Rahmens abgewinkelt, erstrecken. In dieser Richtung können entsprechende, den Stützvorsprüngen 3a, 3b, 3c in ihrer Erstreckungsrichtung folgende Verstärkungsrippen 4a, 4b, 4c an den Stützvorsprüngen 3a, 3b, 3c vorgesehen, insbesondere angespritzt sein.

Am freien in Fahrtrichtung X weisenden Ende der Stützvorsprünge 3a, 3b, 3c sind Anlageabschnitte 3a1, 3b1, 3c1 vorgesehen, die zur Anlage der sich im Wesentlichen quer zur Fahrtrichtung erstreckenden Lamellen 2 dienen und die im gezeigten Beispiel als Zapfen mit einer Erstreckungsachse in Längsrichtung Y der Lamellen 2 ausgebildet sind.

Die Anlageabschnitte 3a1, 3b1, 3c1 sind zur Anlage gegen die Lamellen 2 ausgebildet. Dazu sind die Lamellen in ihrer Längsrichtung Y bevorzugt profiliert und weisen bevorzugt Anlagebereiche 2a, 2a' auf, die als sich in Längserstreckung Y der Lamelle 2 verlaufende Rillen mit wenigstens teilweise rundem Querschnitt ausgebildet sein können, wie dies insbesondere aus der Figur 4 zu sehen ist. Gezeigt ist dort ein Schnitt, in welchem das Zusammenwirken der Stützvorsprünge 3a, 3b, 3c und der Lamellen 2, 2' verdeutlicht wird. Die Lamellen 2 deuten den vollständig geschlossenen Zustand an, keine Luft von außen kann in den Kühler des Fahrzeugs einströmen. Die Lamellen 2' sind dieselben Lamellen wie 2, nur in einem entsprechenden geöffneten Zustand, bei dem maximaler Lufteinlass in den Kühler möglich ist. Durch Steuerung und Regulierung kann der Schwenkwinkel der Lamellen 2, 2' auch auf Zwischenpositionen eingestellt werden.

Im geschlossenen Zustand der Lamellen 2 ist die Windlast entgegen der Fahrrichtung X am höchsten, da die durch die Lamellen 2 beschriebene Widerstandsfläche am größten ist. Mit den Anlagebereichen 2a stützen sich die Lamellen 2 an den Anlageabschnitten 3a1, 3b1, 3c1 der Stützvorsprünge 3a, 3b, 3c, wobei im gezeigten Beispiel ein gewisser Formschluss zwischen Lamelle und Stützvorsprung im Anlagebereich entsteht. Dadurch wird eine Durchbiegung der Lamelle aufgrund zu großer Windlast verhindert, wobei auch die Profilierung der Lamelle 2 ebenfalls für eine Versteifung sorgt, die aber gleichzeitig noch als formschlüssiger Anlagebereich für die Stützvorsprünge eingesetzt werden kann.

Die bevorzugt zapfenförmig ausgebildeten Anlageabschnitte dienen, wie in Figur 4 zu sehen ist, auch als Schwenklager bei der Verstellung der Lamelle, deren Anlagebereich 2a, 2a' sich beim Verschwenken um den Schwenkzapfen 3a1, 3b1, 3c1 herum abwälzt.

Neben den in Figur 3A gezeigten Versteifungsrippen 4a, 4b, 4c können weitere Versteifungen vorgesehen sein, etwa in Z-Richtung kann die Stützstrebe 5 durch eine Versteifungsrippe 4a verstärkt sein. Bevorzugt sind die Stützstrebe und die Anlageabschnitte 3a1, 3b1, 3c1, bzw. deren jeweilige Stützvorsprünge 3a, 3b, 3c in Richtung Y, also parallel zur Schwenkachse der Lamellen leicht versetzt angeordnet, im gezeigten Beispiel ist ein Versatz der Breite d vorgesehen. So kann das gesamte Bauteil aus Rahmen und Stützelementen einstückig im Spritzgussverfahren hergestellt werden, ohne dass Hinterschneidungen im Spritzgusswerkzeug erforderlich sind.

Auf diese Weise kann die Zahl der erforderlichen Bauteile auf ein Minimum reduziert und der Montageaufwand stark vereinfacht werden.

## Patentansprüche

1. Fahrzeugfrontend mit einem Kühlerbereich und einer vor dem Kühlerbereich angeordneten Luftklappenvorrichtung, welche einen Rahmen (1) und darin eingesetzte zur Regulierung des Lufteinlasses schwenkbare Lamellen (2) aufweist, wobei sich die Lamellen jeweils mit zwei gegenüberliegenden Seiten (2a, 2b) mit ihrer Längserstreckung zwischen entsprechenden Schwenklagern (1a, 1b) des Rahmens (1) erstrecken, in denen sie um eine etwa quer zur Fahrtrichtung (X) verlaufende Schwenkachse (Y) schwenkbar gelagert sind, wobei am Rahmen (1) zwischen den gegenüberliegenden Schwenklagern (1a, 1b), zwischen denen sich die Lamellen (2) erstrecken, Stützelemente (3) vorgesehen sind, die dazu ausgelegt sind, die Lamellen (2) gegen eine auf diese entgegen Fahrtrichtung (X) wirkende Drucklast abzustützen,
wobei die Stützelemente (3) Stützvorsprünge (3a, 3b, 3c) aufweisen, welche so ausgebildet sind, dass sie jeweils gegen einen Anlagebereich (2a, 2a') auf der Innenseite einer Lamelle (2) anliegen oder bei entgegen der Fahrtrichtung (X) auf die Lamelle (2) ausgeübter Drucklast anliegen können, und wobei die Stützvorsprünge (3a, 3b, 3c) Anlageabschnitte (3a1, 3b1, 3c1) zur Anlage an die Anlagebereiche (2a, 2a') der Lamelle (2) aufweisen, wobei
die Stützelemente (3) eine quer zur Fahrtrichtung und quer zur Längserstreckung der Lamellen (2) verlaufende, zwei gegenüberliegende Ränder des Rahmens (1) verbindende Stützstreben (5) aufweisen, an denen die Stützvorsprünge (3a, 3b, 3c) vorgesehen sind,
**dadurch gekennzeichnet, dass**
die Stützvorsprünge (3a, 3b, 3c) quer zur Fahrtrichtung (X) zur Stützstrebe (5) wenigstens abschnittweise versetzt angeordnet sind.

2. Fahrzeugfrontend, nach Anspruch 1,
**dadurch gekennzeichnet,**
**dass** die Anlagebereiche (2a, 2a') als Vertiefungen in der Lamelle (2) ausgebildet sind, in die die Anlageabschnitte (3a1, 3b1, 3c1) eingreifen.

3. Fahrzeugfrontend nach Anspruch 2,
**dadurch gekennzeichnet,**
**dass** die Anlageabschnitte (3a1, 3b1, 3c1) als parallel zur Längsrichtung (Y) der Lamellen (2) verlaufende Zapfen ausgebildet sind, die beim Schwenken der gegen sie anliegenden Lamellen (2) ein Schwenklager für die Lamellen (2) bilden.

4. Fahrzeugfrontend nach einem der vorigen Ansprüche,
**dadurch gekennzeichnet,**
**dass** die Anlagebereiche (2a, 2a') der Lamellen (2) als sich in deren Längsrichtung (Y) erstreckende Rille mit wenigstens teilweise rundem Querschnitt ausgebildet sind.

5. Fahrzeugfrontend nach einem der vorigen Ansprüche,
**dadurch gekennzeichnet,**
**dass** die Stützelemente (3) mit den Stützvorsprüngen (3a, 3b, 3c) am Rahmen (1) angespritzt oder mit diesem einstückig ausgebildet sind.

6. Fahrzeugfrontend nach einem der vorigen Ansprüche,
**dadurch gekennzeichnet,**
**dass** die Stützelemente (3) Versteifungsrippen (4a, 4b, 4c) aufweisen, die insbesondere einteilig mit den Stützelementen (3) ausgebildet oder an diese angespritzt sind.

7. Fahrzeugfrontend nach Anspruch 6,
**dadurch gekennzeichnet,**
**dass** die Versteifungsrippen (4a, 4b, 4c) sich in Fahrtrichtung (X) und quer zur Fahrtrichtung (Y) und/oder in einer Richtung (Z) senkrecht den genannten Richtungen erstrecken.

8. Fahrzeugfrontend nach einem der vorigen Ansprüche,
**dadurch gekennzeichnet,**
**dass** das Stützelement (3) im Bereich jedes Stützvorsprungs (3a, 3b, 3c) einen, insbesondere oberhalb und/oder unterhalb desselben vorgesehenen, Aufnahmeraum (6) zur Aufnahme eines Teils der Lamellen (2) beim Verschwenken derselben in die geöffnete Stellung aufweist.

## Claims

1. Vehicle front end with a cooler area and an air flap device arranged before the cooler area, said air flap device having a frame (1) and pivotable fins (2) inserted therein to regulate the air inlet, wherein the fins (2) each extend with two opposing sides (2a, 2b) with their longitudinal extension between corresponding pivot bearings (1 a, 1 b) of the frame (1), in which they are pivotably mounted about a pivot axis (Y) extending approximately transversely to the direction of travel (X), wherein support elements (3) are provided on the frame (1) between the opposing pivot bearings (1a, 1b), between which the fins (2) extend, said support elements (3) being designed to support the fins (2) against a pressure load acting on them contrary to the direction of travel (X),
wherein the support elements (3) have support protrusions (3a, 3b, 3c) which are designed so that they each lie against an abutment area (2a, 2a') on the inner side of a fin (2) or can lie against it in the event of a pressure load exerted on the fins (2) contrary to the direction of travel (X), and wherein the support protrusions (3a, 3b, 3c) have abutment portions (3a1, 3b1, 3c) for abutment against the abutment areas (2a, 2a') of the fins (2),
wherein the support elements (3) have supporting struts (5), extending transversely to the direction of travel and transversely to the longitudinal direction of the fins (2), said supporting struts (5) connecting two opposite edges of the frame (1), and on which supporting struts (5) the support protrusions (3a, 3b, 3c) are provided,
**characterised in that**
the support protrusions (3a, 3b, 3c) are arranged, transverse ly to the direction of travel (X), offset at least in sections relative to the support strut (5).

2. Vehicle front end according to claim 1,
**characterised in that**
the abutment areas (2a, 2a') are formed as depressions in the fin (2), into which the abutment portions (3a1, 3b1, 3c1) engage.

3. Vehicle front end according to claim 2,
**characterised in that**
the abutment portions (3a1, 3b1, 3c1) are formed as pin elements extending parallel to the longitudinal direction (Y) of the fins (2), said pin elements forming, upon pivoting of the fins (2) lying against them, a pivot bearing for the fins (2).

4. Vehicle front end according to one of the preceding claims,
**characterised in that**
the abutment areas (2a, 2a') of the fins (2) are formed as a groove extending in the longitudinal direction (Y) thereof with an at least partially round cross-section.

5. Vehicle front end according to one of the preceding claims,
**characterised in that** the support elements (3) are sprayed with the support protrusions (3a, 3b, 3c) on the frame (1) or integrally formed therewith.

6. Vehicle front end according to one of the preceding claims,
**characterised in that**
the support elements (3) have reinforcing ribs (4a, 4b, 4c) which are formed in particular integrally with the support elements (3) or sprayed thereon.

7. Vehicle front end according to claim 6,
**characterised in that**
the reinforcing ribs (4a, 4b, 4c) extend in the direction of travel (X) and transversely to the direction of travel (Y) and / or in a direction (Z) perpendicular to said directions.

8. Vehicle front end according to one of the preceding claims,
**characterised in that**
the support element (3) has, in the area of each support protrusion (3a, 3b, 3c), a receiving area (6), provided in particular above or below said support protrusion (3a, 3b, 3c), to receive a part of the fins (2) upon pivoting thereof into the open position.

## Revendications

1. Extrémité frontale de véhicule automobile, avec une zone radiateur et un agencement de volet d'air qui présente un cadre (1) et des lamelles (2) pivotantes qui, logées dans celui-ci, sont destinées à réguler l'entrée d'air, sachant que les lamelles s'étendent, chacune, dans leur direction longitudinales, avec deux côtés opposés (2a, 2b), entre des paliers pivotants correspondants (1a, 1b) du cadre (1), dans lesquels elles sont montées à pivotement autour d'un axe de pivotement (Y), qui s'étend transversalement par rapport au sens de marche (X), sachant que, sur le cadre (1), entre les paliers pivotants (1a, 1b), entre lesquels s'étendent les lamelles (2), sont prévus des éléments de support (3) qui sont conçus pour soutenir les lamelles (2) en présence d'une charge de compression agissant à l'opposé de ce sens de marche (X),
sachant que les éléments de support (3) présentent des saillies de support (3a, 3b, 3c), qui sont conçues de manière à porter chacune contre une zone d'appui (2a, 2a'), sur la face intérieure d'une lamelle (2), ou pour pouvoir venir y porter en présence d'une charge de compression exercée sur les lamelles (2), à l'opposé de du sens de marche (X), et sachant que les saillies de support (3a, 3b, 3c) présentent des sections de support (3a1, 3bl, 3cl), destinées à porter contre les zones d'appui (2a, 2a') des lamelles (2), les éléments de support (3) présentent une entretoise de soutien, qui s'étend transversalement par rapport au sens de marche et au sens de la longueur des lamelles (2) et deux entretoises de soutien (5), reliant deux bords opposés du cadre (1), sur lesquelles sont prévues les saillies de support (3a, 3b, 3c),
**caractérisée en ce que**
les saillies de support (3a, 3b, 3c) sont disposées transversalement par rapport au sens de marche (X), décalées, au moins par sections, par rapport à l'entretoise de soutien (5).

2. Extrémité frontale de véhicule automobile selon la revendication 1,
**caractérisée en ce que**
les zones d'appui (2a, 2a') sont formées dans les lamelles (2) en tant que cavités, dans lesquelles s'engagent les section de soutien (3a1, 3bl, 3c1).

3. Extrémité frontale de véhicule automobile selon la revendication 2,
**caractérisée en ce que**
les section de soutien (3a1, 3bl, 3cl) sont conçues sous la forme d'ergots qui, s'étendant parallèlement à la direction longitudinale (Y) des lamelles (2) et portent contre lesdites lamelles (2) lors du pivotement de celles-ci, forment un palier pivotant pour lesdites lamelles (2).

4. Extrémité frontale de véhicule automobile selon l'une des revendications précédentes,
**caractérisée en ce que**
les zones d'appui (2a, 2a') des lamelles (2) sont réalisées en tant que rainures à section transversale au moins partiellement ronde, qui s'étendent dans la direction longitudinale (Y) de celles-ci.

5. Extrémité frontale de véhicule automobile selon l'une des revendications précédentes,
**caractérisée en ce que**
les éléments de support (3) son injectés avec les saillies de support (3a, 3b, 3c) sur le cadre (1) ou formés d'une pièce avec celui-ci.

6. Extrémité frontale de véhicule automobile selon l'une des revendications précédentes,
**caractérisée en ce que**
les éléments de support (3) présentent des nervures de raidissement (4a, 4b, 4c) qui, en particulier, sont formées d'une seule pièce avec lesdits éléments de support (3) ou injectées sur ceux-ci.

7. Extrémité frontale de véhicule automobile selon la revendication 6,
**caractérisée en ce que**
les nervures de raidissement (4a, 4b, 4c) s'étendent dans le sens de marche (X) et transversalement au sens de marche (Y) et / ou dans une direction (Z) perpendiculaire auxdites directions.

8. Extrémité frontale de véhicule automobile selon l'une des revendications précédentes,
**caractérisée en ce que**
l'élément de support (3) présente, dans la région de chaque saillie de support (3a, 3b, 3c), un logement (6), qui, prévu en particulier au-dessus et / ou au-dessous de celle-ci, est destiné à recevoir une partie des lamelles (2) lors du pivotement de celles-ci dans la position ouverte.
